# EUROPEAN PATENT APPLICATION

(11) **EP 4 530 915 A1**
(43) Date of publication of application: **02.04.2025**
(21) Application number: 23465539.7
(22) Date of filing: 26.09.2023
(51) Int. Cl.: G06F 30/3308, G06F 11/00, G06F 119/16

(54) **FUNCTIONAL EQUIVALENCE ASSESSMENT METHOD BETWEEN VERIFICATION ENVIRONMENTS BASED ON SIGNAL STATISTICAL ANALYSIS**

(71) Applicant: Siemens Aktiengesellschaft, 80333 München (DE)
(72) Inventor: GHEORGHE, Stefan, 100456 Ploiesti, Prahova (RO); GONTIA, Flavia, 500003 Brasov (RO); BANCIU, Nicolae-Alexandru, 500096 Brasov (RO); OPRICA, Daniel, 500138 Brasov (RO); BORZASI, David, 500046 Brasov (RO); FALCESCU, Catalin-Ionut, 500170 Brasov, Brasov (RO); LASCU, Andreea Mihaela, 505800 Zarnesti (RO)
(74) Representative: Fierascu, Cosmina-Catrinel

(57) **Abstract**

Present invention concerns a method for integrated circuitry design, the method comprising obtaining (B10) reference data (300, 300a, 300b) pertaining to a first verification environment (100, 200, 310). The method also comprises obtaining (B12) test data (320, 320a, 320b) pertaining to a second verification environment (150, 200, 330), evaluating (B14) the test data (320, 320a, 320b) based on the reference data (300, 300a, 300b) , as well as providing (B16) output representing a result of the evaluating.

The invention also concerns related devices.

## Description

Present invention concerns approaches for circuity design, in particular regarding verification of a design, based on a verification environment.

### Background of the Invention

One of the critical steps in the process of digital hardware design is verification. Verification ensures that the design functions correctly according to its specification. One of the methods used for verification is simulation, which involves running a program that simulates the behavior of the design; a design may in general pertain to a device and/or integrated circuity and/or a module or component.

In order to be able to simulate the behavior of the design, additional elements may be used to generate stimuli and analyze the correctness of the design. The totality of these elements may be referred to as the verification environment.

For many projects the verification environments are reused or expanded upon, e.g., if a module is re-used for a different or updated device. A problem may arise when an already existing verification environment changes, e.g., must be re-written in another language and/or underlying libraries change. This could be caused by advances in technology, licensing issues or tool support issues.

### Disclosure of the Invention

A problem underlying the invention consists in providing an improved technique to determine the level of similarity between different verification environments, e.g., whether and/or to which degree they provide the same signaling regarding a device under test (DUT).

The invention solves the given problem by means of subject-matter defined in enclosed independent claims. Dependent claims describe preferred embodiments.

There is disclosed a method for integrated circuitry design. The method comprises obtaining reference data pertaining to a first verification environment. The method also comprises obtaining test data pertaining to a second verification environment. Moreover, the method comprises evaluating the test data based on, and/or in reference to, the reference data, and providing output representing a result of the evaluating. This facilitates reuse of stored reference data to evaluate a new (second) verification environment. The method may comprise performing functional equivalence assessment, e.g., between and/or pertaining to the first and/or second verification environments, which may be based on statistical signal analysis. The method may be performed by a computer system, e.g., a general-purpose computer system and/or a system adapted specifically for integrated circuitry design and/or hardware design and/or verification. High degrees of automation may be achieved thusly.

It may be considered that reference data may represent first input signaling to a first device under test in the first verification environment, and/or may represent first output signaling from the first device under test in the first verification environment. Test data may represent second input signaling to a second device under test in the second verification environment, and/or may represent second output signaling from the second device under test in the second verification environment. Evaluating may be performed on such signaling, e.g., utilizing statistical signal analysis. The first device under test may be the same as the second device under test (e.g., according to description and/or functionality and/or as simulated), and/or the second device may be intended to provide the functionality of the first device. Some difference in implementation, e.g., updates and/or bug fixes and/or additional functionality may be available in the second device, leaving the core functionality the same as the first device.

The first verification environment may be a simulation environment, and/or the second verification environment may be a simulation environment. A simulation environment may be provided in software and/or based on a programming language. Thus, verification may be performed while designing a device or circuity, in particular before it is implemented in hardware.

Evaluating may in general comprise performing statistical analysis on reference data and test data, e.g., determining correlations and/or clustering of signals, and/or comparing signaling characteristics and/or timing. This may facilitate reliable identification of desired, or even undesired, signaling and/or associated behavior of the device under test.

Reference data may represent signaling sequences of first input signaling and/or first output signaling and/or associated timings, e.g., of the first verification environment and/or the first DUT. Test data may represent second input signaling and/or second output signaling and/or associated timings, e.g., of the second verification environment and/or the second DUT. Such data may be obtained and/or stored based on executing the verification environments, e.g., simulating signaling input into a device under test, and simulating the output produced by the device under test in response. Such data may be particularly suitable for signal statistics.

Evaluating may be based on utilizing time domain windows on signaling sequences. A time window may cover a part of a signaling sequence, e.g., of input signaling like first or second input signaling, or of output signaling like first or second output signaling. The same time window (e.g., in duration, not necessarily in position) capturing a signal sequence (or part thereof) of interest pertaining to first signaling may be used to a corresponding part of the second signaling, or vice versa. Alternatively, or additionally to a time window, a sample number window and/or frequency window may be used, e.g., based on utilizing a frequency domain-based approach, which may comprise transforming time domain data into frequency domain data. Such transforming may for example be based on Fourier transformation or wavelet transformation or similar. A window size may be determined automatically, and/or be based on a user input. This may allow efficient identification of interesting signaling sequence parts, potentially lowering processing overhead.

It may be considered that evaluating may be based on, and/or be in accordance with, a verification plan, which may be indicative of signaling and/or functionality to be tested. The same VPLAN may pertain to the first verification environment and/or the second verification environment. In some cases, the VPLAN of the second verification environment may comprise the VPLAN of the first verification environment, however, it may comprise additional checks and/or task and/or functionality to check for. This may allow a high-level comparison, and/or may in particular facilitate manageable manual input.

The first verification environment and the second verification environment may pertain to the same device under test, and/or to the same environment and/or integrated circuitry design. This may facilitate reliable comparison of the verification environments, based on which confidence in the second verification environment may be built up for future use and/or comparison.

The first verification environment and the second verification environment may be represented in programming languages, in particular in different programming languages. The programming languages may be different HDLs/HVLs, and/or functional languages, and/or one may be a functional language, and one may be an HDL or HVL. Simulation and/or virtualization may be reliably performed, e.g., using well-defined tools for handling such languages.

It may be considered that the first verification environment and the second verification environment may pertain to a device under test, wherein the device under test may represent and/or comprise a module for integrated circuitry. The device under test may be the same for both environments.

Evaluating may be based on correlating first signaling associated to the first verification environment with second signaling associated to the second verification signaling. Correlating may be based on associated windows, e.g., in time domain and/or frequency domain, and/or may pertain to input signaling sequences or part/s thereof of the first verification environment (first input signaling) being correlated with input signaling sequences or part/s thereof of the second verification environment (second input signaling). Alternatively, or additionally, correlating may pertain to output signaling sequences or part/s thereof of the first verification environment (first output signaling) being correlated with output signaling sequences or part/s thereof of the second verification environment (second output signaling) . Correlating may in general be based on a correlation function, e.g., a cross-correlation function.

The output may in general indicate a similarity degree between the first verification environment and the second verification environment, e.g., based on a correlation parameter, and/or based on a plurality of correlation parameters. This may provide a format with good readability.

There is also considered a computer system adapted for performing a method as described herein.

Moreover, there is proposed a computer program product comprising computer-executable instructions and/or code causing a computer system to execute a method as described herein when executed by and/or on the computer system. The computer system may be any computer system as described herein. A computer program product, and/or a computer system, may comprise a specific module for each action of a method performed, e.g., a module for obtaining test data and/or a module for obtaining reference data and/or a module for evaluating and/or a module for providing output.

A storage medium storing a computer program product as described herein is also described. A computer program product may be implemented as, and/or comprise, software. A storage medium may comprise hardware.

Approaches disclosed herein facilitate ensuring that the new verification environment (VEUT - Verification Environment Under Test, or second verification environment) provides at least the same or sufficiently similar stimuli as the initial one (VERef - Verification Environment Reference, or first verification environment).

In some cases, the method may comprise detecting and/or determining errors and/or bugs in the second verification environment and/or associated tools, and/or may comprise providing indication of such as output. This may improve development of new tools and/or environments.

Obtaining data, e.g., test data or reference data, may comprise and/or be based on accessing a storage medium storing the data. In some cases, obtaining data may comprise performing a simulation, e.g., in a verification environment, and/or detecting signals and/or data from the simulation; such may be stored in a storage medium. Test data and/or reference data may be stored in a database system, which may be based on and/or comprise a computer system.

Signaling may represent simulated signaling. In general, signaling may represent a sequence of signals, e.g., a time-domain sequence. Signaling, e.g., signaling provided by a verification environment like input signaling may be simulated according to communication interfaces of the environment and/or the device under test. Input signaling may be signaling provided as input to a device under test. Output signaling may be signaling provided as output be the device under test, e.g., in response and/or with a time delay to input signaling. First signaling may comprise first input signaling and/or first output signaling, second signaling may comprise second input signaling and/or second output signaling. Signaling may be associated to an environment if it is generated and/or provided and/or monitored and/or received and/or occurring in the environment, and/or generated by and/or provided to a DUT in the environment.

Some specific input signaling sequences may correspond to checks or test cases according to a verification plan (VPLAN). Input signaling may be random and/or randomized, and/or may comprise a random component. Randomization may for example pertain to timing and/or bandwidth and/or amplitude (e.g., if analog) and/or value represented by a signal or signal sequence. Different verification environments may utilize different randomization. Input signaling may generally be considered as stimulating output signaling, and may also be referred to as stimulus and/or stimuli .

In general, an integrated circuity designed may comprise one or more modules or component, and/or one or more devices under test. Different devices under test of a (e.g. , the same) design may have associated thereto different verification environments. The integrated circuitry design may pertain to hardware, and/or may represent an ASIC design and/or chip design and/or SoC design and/or FPGA design, and/or other hardware design.

A verification environment may in general be adapted to provide a simulation of an environment for a device under test; it may be executable and/or executed on a computer system. The device under test may be a module and/or component. A verification environment and/or a device under test may be digitally represented, e.g., as a digital twin, and/or based on a programming language, in particular a hardware description language, HDL, or hardware verification language, HVL. Examples of HDL may comprise Verilog or VHDL or SystemC. Examples of HVL may comprise SystemVerilog or "e" verification language. In some cases, the environment and/or the device under test may be represented by a functional programming language, e.g., C or C++; the approaches described herein facilitate evaluation at different stages of design of the device under test.

In general, a verification environment may represent the intended surrounding or environment for a device under test, e.g., one or more communication interfaces and/or other components of a design the device under test is to be included in and/or is intended to be a part or component of. Executing an environment and/or performing a simulation may comprise executing the programming language representation of environment and/or device under test, e.g., based on utilizing a parser and/or interpreter and/or compiler and/or associated tools and/or tool suites. In some cases, a device under test may be represented in a different format and/or language than the environment it is used in is represented in. Formatting and/or translation functionality may be utilized in this case, e.g., to adapt and/or accommodate accordingly.

In general, a verification environment may be adapted for verification of a design and/or the design of a device under test, e.g. , for verification of its functionality, in particular in the context of a verification plan. In particular, it may be verified that the design and/or device under test provides the intended functionality, and/or does not show bugs and/or unexpected or undesired behavior, at least within the framework of the verification environment. As such, a verification environment may be considered a form of simulated test system for a design and/or device under test.

Evaluating based on reference data may comprise comparing signaling and/or signaling statics between the reference data and test data, and/or between the verification environments. In particular, first input signaling may be compared with second input signaling, and/or first output signaling with second output signaling, and/or time shifts between first input signaling and first output signaling may be compared with time shifts between second input signaling and second output signaling. Evaluating and/or comparing may be based on determining a correlation and/or comparing integrated values and/or characteristics, in particular regarding time domain behavior.

Evaluating and/or comparing may be based on clustering signals (e.g., input signals and/or output signals); similar clusters in the respective other environment may be searched for, for which deeper analysis may be performed. Clustering may be in accordance with a VPLAN, e.g., such that signal clusters corresponding to a desired output and/or functionality and/or input may be determined and/or used for evaluation. This may require suitable windowing and/or selection of signal sequences in time series of randomly produced signals. Statistical signal analysis may comprise and/or be based on clustering and/or determining correlation/s. A correlation may be representable by a correlation parameter, e.g. , between 0 and 1, with 0 representing no correlation and 1 total correlation. However, such parameter may be normalized to different values.

Evaluating may be performed based on a configuration, which may for example configure or indicate signaling of interest and/or window size and/or window size criteria, and/or correlation criteria, e.g., allowable correlation parameters. Allowable correlation parameters may indicate which parameter values indicate sufficient similarity, e.g., between signaling, and/or signaling sequences or parts thereof, and/or between environments, e.g., as basis for comparison or further analysis. Alternatively, or additionally, allowable parameters may indicate parameter values indicating sufficient similarity of the second environment to the first environment, e.g., for further use.

Providing output based on a result of evaluating may comprise processing the result, e.g., compressing and/or reformatting. Providing output may comprise writing into a file and/or storage medium and/or database, and/or presenting on a screen and/or dashboard.

The method may especially be carried out, completely or in part, by electronic execution means like a computer system. To these ends, the method may be formulated as a computer program product with program code means and/or instructions. The above-described system may comprise the computer system. Advantages or features of the method may apply to the method and vice versa.

### Brief Summary of the Enclosed Figures

The above-described properties, features and advantages of present invention as well as the way they are achieved will be made clearer and better understandable in the light of the following discussion, making reference to exemplary embodiments shown in accompanying figures, in which
- Figure 1: shows an exemplary evaluation scenario;
- Figure 2: shows an exemplary verification scenario;
- Figure 3: schematically shows an exemplary method of the invention; and
- Figure 4: schematically shows another exemplary method of the invention.

### Detailed Exemplary Embodiments of the Invention

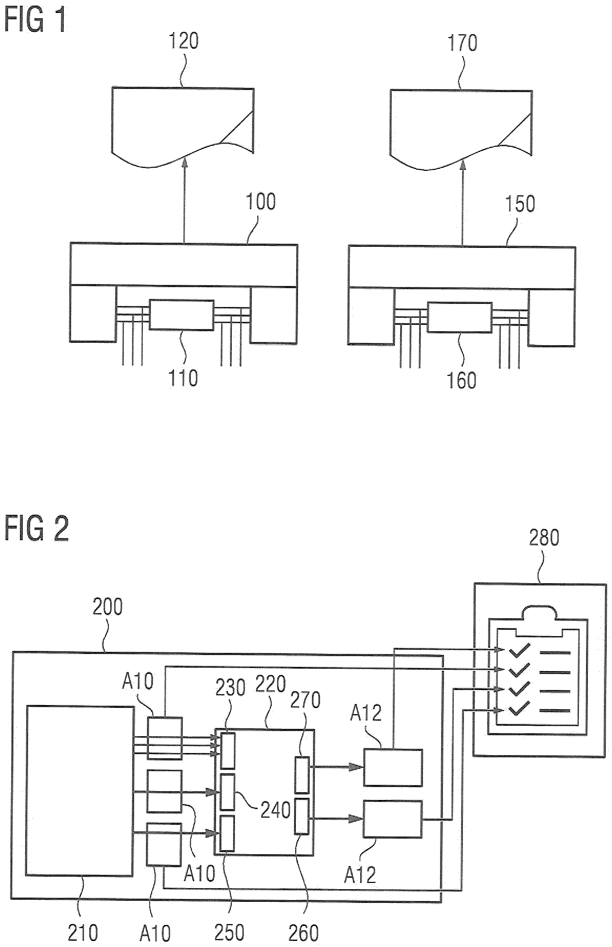

Figure 1 shows an exemplary evaluation scenario with a first verification environment 100, which may also be referred to as reference verification environment (or Verification Environment Reference VERef). The first verification environment 100 may pertain to a first device under test 110, which may be supplied with input signaling (also referred to as stimuli), to provide output signaling. A verification plan 120 (which may be referred to as first verification plan and/or VPlan VERef) may be provided for the first verification environment. A second verification environment 150 is considered (also referred to as VE under test, VEUT), which may pertain to a second device under test 160. A second VPlan 170 (also referred to as VPlan VEUT) may be associated to the second verification environment 150. The second VPlan 170 may comprise at least the first VPlan 120, and/or may be identical thereto, in particular if the devices 110 and 160 are identical and/or share the functionality of the first device 110.

The first device under test 110 and the second device under test 160 may be identical, e.g., in terms of functionality, and/or the second device under test 160 may have at least the functionality of the first device under test 110. A functional equivalence assessment of the environments 100, 150 may be performed, based on evaluation of associated test data pertaining to the second environment 150 based on reference data pertaining to the first environment 100.

The verification environments may be implemented in a hardware description language (HDL) or hardware verification language (HVL), or in a combination of HDLs parts and HVLs parts, as may the devices under test (DUT). The languages used to implement the environments 100 and 150 may be different. It is proposed evaluating whether the second environment 150 provides the desired information and/or functionality based on information provided in the context of the first environment 110.

Figure 2 shows an exemplary scenario of operating and/or evaluating a verification environment 200, e.g., a first or second verification environment 100 or 150. A verification environment 200 may in general comprise a stimulus or signaling generator 210, which may be adapted for stimuli generation, which may also be referred to as providing input signaling. The stimuli or input signaling may be provided to a device under test 220 (e.g., a DUT 110 or 160). The DUT 220 comprises one or more communication interfaces, e.g., input interfaces 230, 240, 250 and/or output interfaces 270, 280. Interfaces may in general be unidirectional, or bidirectional. The generator 210 provides input signaling stimuli to input interfaces, e.g., in form of randomized signaling sequences. The verification environment 200 is adapted to monitor A10 the input signaling and/or interfaces 230, 240, 250. The DUT 220 provides output signaling, e.g., in response to input signaling. The verification environment 200 is adapted to monitor A12 the output signaling and/or the output interfaces 260, 270.

Monitoring in general may comprise storing information regarding the monitored signaling, e.g., as reference data or test data. Monitoring may pertain to signal timing and/or signal form and/or one or more other signal characteristics; corresponding information may be stored.

It may be considered that monitoring may comprise checking the monitored signaling for a match in the associated VPlan 280, e.g., regarding signaling sequence and/or format and/or timing and/or associated functionality. This may pertain to input signaling, or output signaling, or a combination thereof (e.g., relation and/or timing of a part or sequence of output signaling in regard to a part or sequence of input signaling). A VPlan may provide and/or indicate a plurality of verification criteria and/or metrics, and/or checks and/or test to be performed, and/or functionalities to be provided. Executing the verification environment may in general comprise simulating the DUT, and/or simulating the environment, and/or simulating generation of the stimuli and/or input signaling, and/or monitoring the interface/s and/or signaling (as simulated).

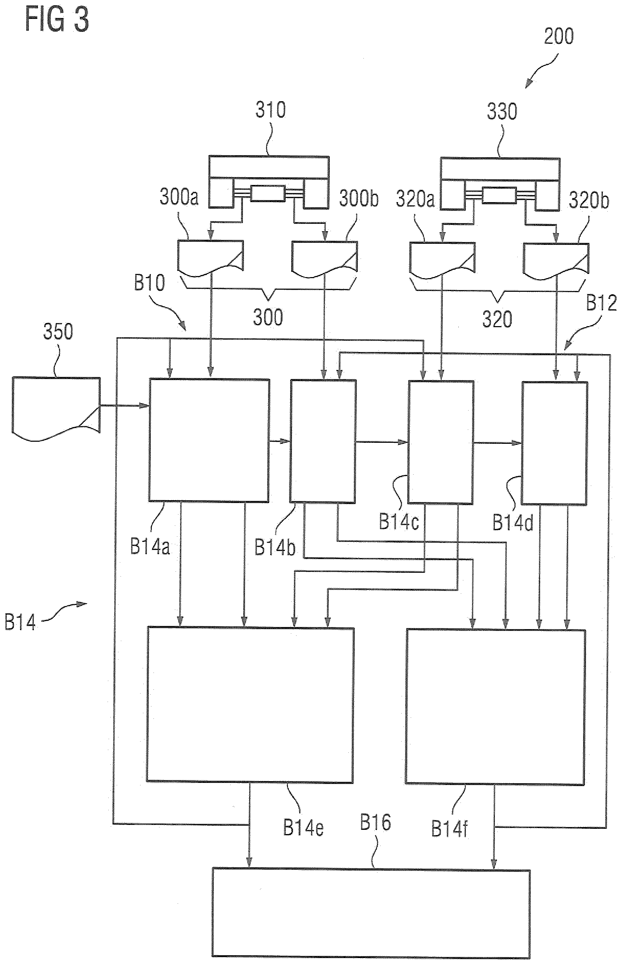

Figure 3 schematically shows an exemplary method of the invention. Reference data 300 pertaining to a first verification environment 310 (which may comprise and/or be connected to a DUT) is provided and/or obtained in an action B10, e.g., in one or more files representing input signaling 300a (input data) and one or more files representing output signaling 300b (output data). Moreover, test data 320 pertaining to a second verification environment 330 (which may comprise and/or be connected to a DUT) is obtained in an action B12. Test data 320 may for example comprise information in one or more files regarding input signaling 320a (e.g., checked against a VPlan, and/or referred to as input data) and/or information in one or more filed regarding output signaling 320b (e.g., checked against the VPlan, and/or referred to as output data). The reference data 300 may be obtained based on executing the first verification environment 310, the test data 320 may be obtained based on executing the second verification environment 330.

A configuration 350 may be provided, which may indicate signaling of interest, and/or window size criteria and/or correlation criteria; this may be in accordance with user input and/or a VPlan and/or automated. In an action B14, evaluating the test data 320 based on the reference data 300 may be performed. Evaluating may in general comprise pre-processing of data, e.g., clustering and/or identifying signals or sequences of interest.

Pre-processing may be based on the configuration 350 and/or VPlan/s. Preprocessing may comprise preprocessing of input information 300a in B14a, and/or of output information 300b in B14b, of the reference data 300. In some cases, preprocessing may comprise preprocessing of input information 320a in B14c, and/or of output information 320b in B14d. Preprocessed input information may be provided to an evaluation action B14e, which may correlate input information of test data with input information of reference data, e.g., processing data pattern correlations.

Preprocessed output information may be provided to an evaluation B14f, which may correlate output information of test data with output information of reference data, e.g., processing data pattern correlations. Results of B14 may be provided for output, e.g., to be output by a dashboard in an action B16.

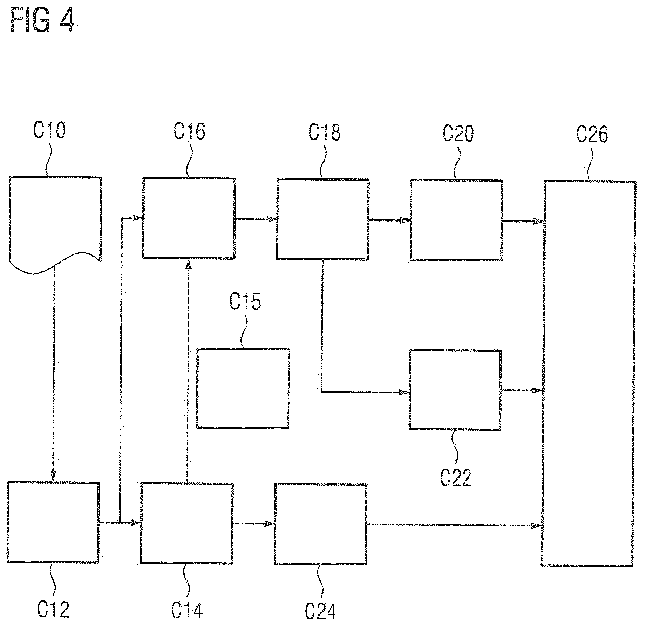

Figure 4 shows another example or viewpoint of evaluating B14, which may be alternative and/or additional to evaluating as described with reference to Figure 3. Test data and reference data may be obtained C10 and parsed C12. The parsed data may be subject to histogram generation C14, e.g., providing a time domain histogram of signaling or signaling sequences. Associated thereto, in C16, interface window matching may be performed, e.g., matching windows between input signallings and/or output signallings, based on the histogram. There may be an action C15 of automatic activity detection, e.g., detecting signaling and/or activity of interest, e.g., DUT activity.

In an action C18, clustering may be performed, e.g., clustering of signals of interest. Such clustering may be provided to an action C20 of label association, e.g., subsuming sequences to specific functionalities. In an action C22, based on the clustering, similarity score computation may be performed.

Based on histogram generation C14, activity distribution comparison C24 may be performed, e.g., comparing frequency and/or timing and/or distribution of certain activities and/or associated signaling sequences, which may pertain to input signaling and/or output signaling. Results of C20 and/or C22 and/or C24 may be provided as output C26, e.g., to a dashboard, which may facilitate result interpretation. Evaluating may comprise, and/or be based on, any one or any combination of actions C10, C12, C14, C15, C16, C18, C20, C22, C24; corresponding module/s may be provided, e.g., in a software.

A computer system may comprise processing circuitry, and/or a computer system and/or processing circuitry may comprise one or more computers, and/or may comprise one or more components and/or may be a distributed system, e.g., interconnected via suitable communication interfaces. Different components may perform different actions, e.g., based on exchanging information via the interface/s. A computer system in general may be and/or comprise one or more computers and/or controllers and/or processing circuitries.

The proposed method may especially be carried out, completely or in part, by electronic execution means like a computer system. To these ends, the method may be formulated as a computer program product with program code means (e.g., instructions, which may in general be computer-readable and/or computer-executable). Advantages or features of the method may apply to the method and vice versa.

In general, circuitry may comprise integrated circuitry. Integrated circuitry or processing circuitry (which may be considered a form of circuity) may comprise one or more processors and/or controllers (e.g., microcontrollers), and/or ASICs (Application Specific Integrated Circuitry) and/or FPGAs (Field Programmable Gate Array) and/or SOCs (System-on-a- Chip), or similar.

In some cases, integrated circuitry may represent one or more components and/or modules, e.g., for processing circuity and/or a device; such a component and/or module may represent a memory and/or processor and/or processor core and/or auxiliary component and/or specific application component, and/or may be connected or connectable to a communication interface, in particular to a bus, e.g., a data bus or address bus, and/or a serial or parallel connection interface. It may be considered that processing circuitry comprises, and/or is (operatively) connected or connectable to one or more memories or memory arrangements or storage media, which may be non-transitory.

A storage medium or memory arrangement may comprise one or more memories. A memory or storage medium may be adapted to store digital information. Examples for memories or a storage medium may comprise volatile and non-volatile and/or non-transitory memory, and/or Random Access Memory (RAM), and/or Read-Only-Memory (ROM), and/or magnetic and/or optical memory, and/or flash memory, and/or hard disk memory, and/or EPROM or EEPROM (Erasable Programmable ROM or Electrically Erasable Programmable ROM). A storage medium may be distributed, e.g., over a one or more similar or different components adapted to store digital information.

Even though present invention has been illustrated and explained in detail above with reference to the preferred embodiments, the invention is not to be construed as limited to the given examples. Variants or alternate combinations of features given in different embodiments may be derived by a subject matter expert without exceeding the scope of present invention.

Independent of the grammatical term usage, individuals with male, female or other gender identities are included within the term.

### Reference List

- 100: first verification environment
- 110: first DUT
- 120: first VPlan
- 150: second verification environment
- 160: second DUT
- 170: second VPlan

- 200: verification environment
- 210: stimuli/signalling generator
- 220: DUT
- 230: input interface
- 240: input interface
- 250: input interface
- 260: output interface
- 270: output interface
- 280: VPlan

- 300: reference data
- 300a: input data
- 300b: output data
- 310: first verification environment
- 320: test data
- 320a: input data
- 320b: output data
- 330: second verification environment

## Claims

1. Method for integrated circuitry design, the method comprising
- obtaining (B10) reference data (300, 300a, 300b) pertaining to a first verification environment (100, 200, 310);
- obtaining (B12) test data (320, 320a, 320b) pertaining to a second verification environment (150, 200, 330);
- evaluating (B14) the test data (320, 320a, 320b) based on the reference data (300, 300a, 300b); and
- providing (B16) output representing a result of the evaluating.

2. Method according to claim 1, wherein the reference data (300) represents first input signaling (300a) to a first device under test (110, 220) in the first verification environment (100, 200, 310), and represents first output signaling (300b) from the first device under test (110, 220) in the first verification environment (100, 200, 310), and/or wherein the test data (320) represents second input signaling (320a) to a second device under test (160, 220) in the second verification environment (150, 200, 330), and represents second output signaling (320b) from the second device under test (160, 220) in the second verification environment (150, 200, 330).

3. Method according to one of the preceding claims, wherein the first verification environment (100, 200, 310) is a simulation environment, and/or the second verification environment (150, 200, 330) is a simulation environment.

4. Method according to one of the preceding claims, wherein the evaluating (B14) comprises performing statistical analysis on reference data (300, 300a, 300b) and test data (320, 320a, 320b) .

5. Method according to one of the preceding claims, wherein reference data (300, 300a, 300b) represents signaling sequences of first input signaling and/or first output signaling and/or associated timings, and/or the test data (320, 320a, 320b) represents second input signaling and/or second output signaling and/or associated timings.

6. Method according to one of the preceding claims, wherein evaluating (B14) is based on utilizing time domain windows on signaling sequences.

7. Method according to one of the preceding claims, wherein evaluating (B14) is based on, and/or is in accordance with, a verification plan (120, 170, 280) indicative of signaling and/or functionality to be tested.

8. Method according to one of the preceding claims, wherein the first verification environment (100, 200, 310) and the second verification environment (150, 200, 330) pertain to the same device under test (110, 160, 220).

9. Method according to one of the preceding claims, wherein the first verification environment (100, 200, 310) and the second verification environment (150, 200, 330) are represented in programming languages, in particular in different programming languages.

10. Method according to one of the preceding claims, wherein the first verification environment (100, 200, 310) and the second verification environment (150, 200, 330) pertain to a device under test (110, 160, 220), the device under test (110, 160, 220) representing a module for integrated circuitry.

11. Method according to one of the preceding claims, wherein evaluating (B14) is based on correlating first signaling associated to the first verification environment (100, 200, 310) with second signaling associated to the second verification signaling (150, 200, 330).

12. Method according to one of the preceding claims, wherein the output indicates similarity degree between the first verification environment (100, 200, 310) and the second verification environment (150, 200, 330).

13. Computer system adapted for performing a method according to one of the preceding claims.

14. Computer program product comprising computer-executable instructions causing a computer system to execute a method according to one of claims 1 to 12 when executed by the computer system.

15. Storage medium storing a computer program product according to claim 14.
